# EUROPEAN PATENT SPECIFICATION

(11) **EP 2 033 988 B1**
(45) Date of publication and mention of the grant of the patent: **13.03.2013**
(21) Application number: 08015697.9
(22) Date of filing: 05.09.2008
(51) Int. Cl.: C08K 3/10, B32B 27/14, C09D 167/07

(54) **Gas-barrier film, and method for sealing display device with gas-barrier film**
Gassperrschicht und Verfahren zur Abdichtung einer Anzeigevorrichtung mit der Gassperrschicht
Film à barrière contre les gaz, et procédé pour dispositif d'affichage d'étanchéité avec film à barrière contre les gaz

(30) Priority: 05.09.2007 JP 2007229737; 16.04.2008 JP 2008107120; 29.05.2008 JP 2008140979
(43) Date of publication of application: 11.03.2009
(73) Proprietor: FUJIFILM Corporation, Tokyo 106-0031 (JP)
(72) Inventor: Tsukahara, Jiro, Ashigarakami-gun, Kanagawa 258-8577 (JP); Minami, Kazumori, Fujinomiya-shi, Shizuoka 418-8666 (JP); Hosoya, Yoichi, Ashigarakami-gun, Kanagawa 258-8577 (JP)
(74) Representative: HOFFMANN EITLE

(56) References cited:
- EP-A- 2 045 355
- JP-A- 2006 130 669
- US-A1- 2006 251 905

## Description

### Filed of the invention

The present invention relates to a gas barrier film and to a method for sealing a display device with a gas barrier film.

### Background of the invention

Heretofore known is a film having a layer constitution of an adhesive layer provided on an inorganic layer or an organic layer (JP-A 2003-326633, JP-A 2006-130669). However, in the case where the film of the type is tried as a sealing film for a display device, its gas-barrier property is insufficient.

In the case where the gas barrier film of the type is used for sealing a display device, it requires an adhesive for bonding them and is therefore problematic in that the working process is complicated.

### Summary of the invention

The object of the invention is to solve the above-mentioned problems and is to provide, as a sealing film for display devices, a gas barrier film capable of simplifying the working process with it and keeping its good gas-barrier property.

Given that situation, the present inventors have assiduously studied and, as a result, have found that the following means can solve the above-mentioned problems.
(1) A gas barrier film comprising a substrate film and a barrier layer containing an organic region and an inorganic region on the substrate film, in which, when the organic region is provided on one surface of the gas barrier film, the outermost layer on the side with the organic region of the gas barrier film is an adhesive layer, and when the organic regions are provided on both surfaces of the gas barrier film, at least one outermost layer of the gas barrier film is an adhesive layer.
(2) The gas barrier film of (1), wherein the organic region is an organic layer and the inorganic region is an inorganic layer.
(3) The gas barrier film of (1) or (2), wherein the layer adjacent to the adhesive layer is an inorganic region or an inorganic layer.
(4) The gas barrier film of (2), wherein the two layers adjacent to the adhesive layer are an inorganic layer and an organic layer in that order nearer to the adhesive layer.
(5) The gas barrier film of (1) or (2), wherein the layer adjacent to the adhesive layer is an easy adhesive layer.
(6) The gas barrier film of any one of (1) to (5), wherein the adhesive layer comprises a UV-curable adhesive or a thermosetting adhesive.
(7) The gas barrier film of any one of (1) to (5), wherein the adhesive layer comprises a UV-curable epoxy resin.
(8) The gas barrier film of any one of (1) to (5), wherein the adhesive layer comprises a thermosetting adhesive.
(9) The gas barrier film of any one of (2) to (8), wherein the organic layer is formed by curing a composition containing at least one (meth)acrylate compound.
(10) The gas barrier film of any one of (2) to (8), wherein the organic layer is formed by curing a composition containing at least one bisphenol skeleton-having (meth)acrylate compound.
(11) The gas barrier film of any one of (2) to (10), wherein the organic layer is formed according to a flash vapor deposition method.
(12) The gas barrier film of any one of (1) to (11), wherein the adhesive layer contains filler.
(13) The gas barrier film of any one of (1) to (12), wherein a peripheral part of the adhesive layer differs in composition from a center part of the adhesive layer.
(14) A film comprising the gas barrier film of any one of (1) to (13) and a peeling layer thereon, wherein the peeling layer is provided on the side in which the adhesive payer is not provided.
(15) A film comprising the gas barrier film of any one of (1) to (13) and a protective layer thereon, wherein the protective layer is provided on the adhesive layer.
(16) A method for sealing a display device, comprising applying the gas barrier film of any one of (1) to (13), or the film of (14) or (15) to a display device in such a manner that its adhesive layer side is on the side near to the display device.
(17) The method of (16), wherein the display device is an organic EL device.
(18) The method of (16) or (17), wherein the adhesive layer of the gas barrier film or the film comprises a UV-curable adhesive or a thermosetting adhesive.
(19) The method of (16) or (17), wherein the adhesive layer of the gas barrier film or the film comprises a UV-curable epoxy resin.
(20) The method of (16) or (17), wherein the adhesive layer of the gas barrier film or the film comprises a thermosetting adhesive.
(21) The method of any one of (16) to (20), wherein a peripheral part of the adhesive layer of the gas barrier film or the film differs in composition from a center part of the adhesive layer of the gas barrier film.
(22) The method of any one of (16) to (20), wherein a peripheral part of the adhesive layer of the gas barrier film or the film differs in composition from a center part of the adhesive layer of the gas barrier film, and the center part is provided on a display part of the display device.
(23) The method of any one of (16) to (22), wherein the gar barrier film or the film is the film of (15), and which comprises peeling the protective layer when the film is provided on the display device.

### Brief description of the drawings

Fig. 1 shows one example of a schematic view of an organic EL device sealed with a gas barrier film of the invention.
Fig. 2 is a top plan view of Fig. 1 that is a side view of the constitution.

### Description of specific embodiments

The contents of the invention are described in detail hereinunder. In this description, the numerical range expressed by the wording "a number to another number" means the range that falls between the former number indicating the lowermost limit of the range and the latter number indicating the uppermost limit thereof. The organic EL device as referred to herein means an organic electroluminescent device.

### (Gas-Barrier Film)

The gas barrier film of the invention is a film having a function of blocking oxygen and moisture in air, and has an adhesive layer on the outermost surface the gas barrier film on the side having an organic region. The gas barrier film of the invention may be any layer known to have a gas-barrier property and is preferably an organic/inorganic laminate-type gas barrier film having an organic region and an inorganic region or an organic layer and an inorganic layer that are alternately laminated.

The organic/inorganic laminate-type gas barrier film has a laminate constitution of an organic region and an inorganic region, or at least one organic layer and at least one inorganic layer.

The organic region and the inorganic region, or the organic layer and the inorganic layer are, in general, alternately laminated. When the film comprises an organic region and an inorganic region, it may be a graded material layer where the regions continuously change in the direction of the thickness of the film. Examples of the graded materials include the materials described in a report by Kim et al., in Journal of Vacuum Science and Technology A, Vol. 23, pp. 971-977 (2005 American Vacuum Society); and a continuous laminate of an organic layer and an organic layer with no interface therebetween as in USP-A 2004-46497. For simplifying the description hereinunder, the organic layer and the organic region are expressed as "organic layer" and the inorganic layer and the inorganic region are as "inorganic layer".

The number of the layers constituting the gas barrier film is not specifically defined, but typically, the film preferably comprises from 2 layers to 30 layers, more preferably from 3 layers to 20 layers. The barrier layer may be provided on only one surface of a plastic film or on both surfaces thereof.

Preferred embodiments of the layer constitution of the gas barrier film of the invention are described below. Needless-to-say, the gas barrier film of the invention is not limited to the layer constitution shown below.
(1) Substrate film/organic layer/inorganic layer/adhesive layer.
(2) Substrate film/inorganic layer/organic layer/adhesive layer.
(3) Substrate film/inorganic layer/organic layer/inorganic layer/organic layer/adhesive layer.
(4) Substrate film/inorganic layer/organic layer/easy adhesive layer/adhesive layer.
(5) Substrate film/organic layer/inorganic layer/organic layer/easy adhesive layer/adhesive layer.
(6) Peeling layer/antistatic layer/substrate film/inorganic layer/organic layer/inorganic layer/organic layer/adhesive layer.

In the invention, the adhering curing temperature of the adhesive layer is preferably lower than the glass transition temperature of the organic layer. Taking this means enables adhesion of the organic layer with no degradation.

In an ordinary gas barrier film, in general, when an inorganic layer as an outermost layer is exposed to air, then the surface of the inorganic layer is readily scratched, and therefore, the surface of the gas barrier film is preferably an organic layer. In the invention, however, an adhesive layer is provided as the outermost layer, and therefore the invention is advantageous in that an organic layer for protecting the film from being scratched may be omitted. Further, as having the adhesive layer, the gas barrier film of the invention has another advantage in that it may be directly stuck to devices and others without requiring an adhesive or the like, and the working process may be thereby simplified.

### (Adhesive Layer)

The adhesive layer in the invention may be any layer containing an adhesive, and is not specifically defined except the adhesive. In the invention, a UV-curable adhesive or a thermosetting adhesive is preferably used, and more preferred is a UV-curable adhesive. The type of the adhesive is not specifically defined. As the UV-curable adhesive, preferred examples are epoxy-type and acrylate-type adhesives, and more preferred are epoxy-type adhesives. Preferred examples of the thermosetting adhesive include epoxy-type adhesives and acrylate-type adhesives, and more preferred are epoxy-type adhesives.

The adhesive layer in the invention may contain any other component than adhesive; and the additional component includes a filler, a moisture absorbent, a deoxidizer, etc.

The adhesive layer in the invention may also serve additionally as any other functional layer, for example, as a shock-absorbing layer, a cushioning layer, etc.

### (Filler)

The filler for use in the invention is not specifically defined, and is, for example, silica.

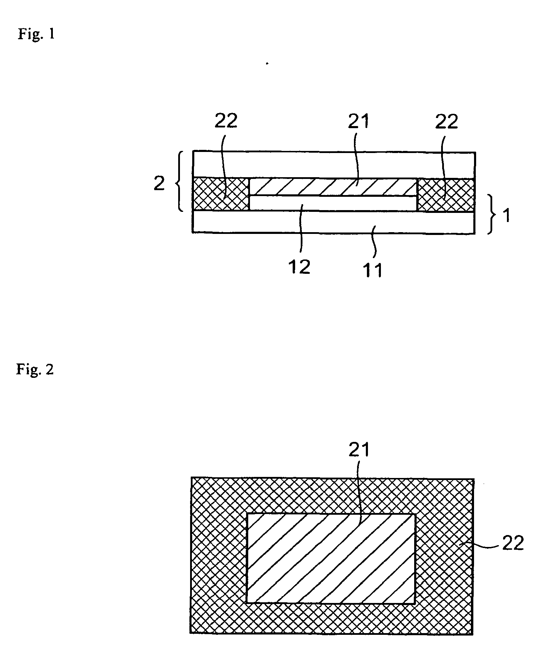

The amount of the filler to be added to the adhesive layer is preferably from 1 to 50 parts by mass of the adhesive content in the adhesive layer, more preferably from 35 to 45 parts by mass. The amount of the filler to be added to the adhesive layer may be adjusted in accordance with use of the adhesive layer. For example, Fig. 1 shows a schematic view of an organic EL device sealed with a gas barrier film of the invention, in which 1 is an organic EL device, 2 is a gas barrier film, and the shadowed parts (21, 22) of these are adhesive layers. In this, the organic EL device 1 has a structure of a display panel 12 provided on a substrate 11. In the invention, it is desirable that the composition of the adhesive layer is varied between the part of the adhesive layer 21 provided on the display part 12 and the other part than the display part, or that is, the part of the adhesive layer 22 provided on the non-display part, and that the amount of the filler is larger in the adhesive layer provided on the non-display part. The filler may enhance adhesiveness but is unfavorable for increasing transparency; and therefore, the constitution of the type may secure both high adhesiveness between the organic EL device and the gas barrier film and high transparency of the constitution.

Fig. 2 is a top plan view of Fig. 1 that is a side view of the constitution. In this, the others than the adhesive layer are omitted in the gas barrier film of the invention. From Fig. 2, it is clearly understood that the composition of the adhesive layer differs between the peripheral part (non-display part 22) and the center part (display part 21).

In the invention, it is desirable that a filler is added to the adhesive layer 21 provided on the display part in an amount of from 5 to 15 parts by mass of the adhesive content in the layer, and to the adhesive layer 22 provided on the non-display part in an amount of from 35 to 45 parts by mass.

### (Easy adhesive layer)

In the invention, an easy adhesive layer may be provided in the film. The easy adhesive layer is a type of a layer that may also be referred to as a primer layer, an undercoat layer, a subbing layer or the like, and this is provided for the purpose of controlling the interfacial condition of a laminate. Providing the easy adhesive layer is advantageous for enhancing adhesiveness.

The easy adhesive layer indispensably contains a binder, and may optionally contain a matting agent, a surfactant, an antistatic agent, fine particles for refractivity control, etc.

The binder is not specifically defined, including, for example, acrylic resin, polyurethane resin, polyester resin, rubber resin, etc.

Acrylic resin is a polymer comprising, as the constitutive ingredients thereof, any of acrylic resin, methacrylic resin and their derivatives. Concretely, for example, it is a polymer comprising, as the main ingredient thereof, any of acrylic resin, methacrylic resin, methyl methacrylate, ethyl acrylate, butyl acrylate, 2-ethylhexyl acrylate, acrylamide, acrylonitrile, hydroxylmethylacrylate or the like, and a copolymer of the former monomer and a monomer copolymerizable with the former monomer (e.g., styrene, divinylbenzene).

Polyurethane resin is a generic term for polymer having an urethane bond in the main chain thereof, and in general, it is produced through reaction of polyisocyanate and polyol. The polyisocyanate includes TDI (tolylene diisocyanate), MDI (methyldiphenyl isocyanate), HDI (hexylene diisocyanate), IPDI (isophorone diisocyanate, etc.; and the polyol includes ethylene glycol, propylene glycol, glycerin, hexanetriol, trimethylolpropane, pentaerythritol, etc.

As the polyurethane resin in the invention, also usable is a polymer prepared by further processing a polyurethane polymer, which is produced through reaction of polyisocyanate and polyol, for chain-extending reaction to thereby increase the molecular weight thereof. Polyester resin is a generic term for polymer having an ester bond in the main chain thereof, and in general, it is produced through reaction of polycarboxylic acid and polyol. The polycarboxylic acid includes, for example, fumaric acid, itaconic acid, adipic acid, sebacic acid, terephthalic acid, isophthalic acid, naphthalenedicarboxylic acid, etc.; and the polyol includes those mentioned in the above.

The rubber resin for use in the invention is a diene-based synthetic rubber falling within a category of synthetic rubber. Concretely, it includes polybutadiene, styrene-butadiene copolymer, styrene-butadiene-acrylonitrile copolymer, styrene-butadiene-divinylbenzene copolymer, butadiene-acrylonitrile copolymer, polychloroprene, etc.

### (Substrate film)

In the gas barrier film of the invention, a plastic film is in general used as the substrate film. The plastic film to be used is not particularly limited with respect to the material quality and thickness, etc. so far as it is a film capable of keeping a laminate of an organic layer, an inorganic layer and the like and can be properly chosen depending upon the use purpose or the like. Specific examples of the plastic film include; and thermoplastic resins such as polyester resins, methacrylic resins, methacrylic acid-maleic acid copolymers, polystyrene resins, transparent fluorocarbon resins, polyimides, fluorinated polyimide resins, polyamide resins, polyamide-imide resins, polyetherimide resins, cellulose acylate resins, polyurethane resins, polyetheretherketone resins, polycarbonate resins, alicyclic polyolefin resins, polyarylate resins, polyethersulfone resins, polysulfone resins, cycloolefin copolymers, fluorene ring-modified polycarbonate resins, alicyclic modified polycarbonate resins, fluorene ring-modified polyester resins and acryloylated compounds.

In the case where the gas barrier film of the invention is used as a substrate of a device such as organic EL devices as described later, it is preferable that the plastic film is composed of a raw material with heat resistance. Specifically, it is preferable that the plastic film is composed of a transparent raw material with high heat resistance having a glass transition temperature (Tg) of 100 °C or higher and/or a linear heat expansion coefficient of not more than 40 ppm/°C. The Tg and linear heat expansion coefficient can be adjusted by an additive or the like. Examples of such a thermoplastic resin include polyethylene naphthalate (PEN: 120 °C), polycarbonate (PC: 140 °C), alicyclic polyolefins (for example, ZEONOR 1600, manufactured by Zeon Corporation: 160 °C), polyarylate (PAr: 210 °C), polyethersulfone (PES: 220 °C), polysulfone (PSF: 190 °C), cycloolefin copolymers (COC: a compound described in Example 1 of JP-A-2001-150584: 162 °C), polyimides (for example, NEOPULIM, manufactured by Mitsubishi Gas Chemical Company, Inc.: 260 °C), fluorene ring-modified polycarbonate (BCF-PC, a compound described in JP-A-2000-227603: 225 °C), alicyclic modified polycarbonate (IP-PC, a compound described in JP-A-2000-227603: 205 °C) and acryloyl compound (a compound described in JP-A-2002-80616: 300 °C or higher) (the numerical figure in each of the parentheses indicates Tg). In particular, in the case where the transparency is required, it is preferable to use an alicyclic polyolefin or the like.

In the case where the gas barrier film of the invention is used in combination with a polarizing plate, it is preferable that the gas barrier layer surface of the gas barrier film (surface on which the laminate including at least one inorganic layer and at least one organic layer is formed) is faced at the inside of a cell and is disposed in the innermost (adjacent to the device). At that time, since the gas barrier film is disposed in the inside of the cell relative to the polarizing plate, a retardation value of the gas barrier film is important. As to a use form of the gas barrier film in such an embodiment, it is preferable that a barrier film using a base material film having a retardation value of not more than 10 nm and a circular polarizing plate ((quarter-wave plate) + (half-wave plate) + (linear polarizing plate)) are laminated and used, or that a linear polarizing plate is combined with a gas barrier film using a base material film having a retardation value of from 100 nm to 180 nm, which can be used as a quarter-wave plate, and used.

Examples of the substrate film having a retardation of not more than 10 nm include cellulose triacetate (FUJITAC, manufactured by Fujifilm Corporation), polycarbonates (PURE-ACE, manufactured by Teijin Chemicals Ltd.; and ELMECH, manufactured by Kaneka Corporation), cycloolefin polymers (ARTON, manufactured by JSR Corporation; and ZEONOR, manufactured by Zeon Corporation), cycloolefin copolymers (APEL (pellet), manufactured by Mitsui Chemicals, Inc.; and TOPAS (pellet), manufactured by Polyplastics Co., Ltd.), polyarylates (U100 (pellet), manufactured by Unitika Ltd.) and transparent polyimides (NEOPULIM, manufactured by Mitsubishi Gas Chemical Company).

Also, films obtained by properly stretching the foregoing film to adjust it so as to have a desired retardation value can be used as the quarter-wave plate.

In view of the matter that the gas barrier film of the invention is utilized as a device such as organic EL devices, the plastic film must be transparent, namely its light transmittance is usually 80% or more, preferably 85% or more, and more preferably 90% or more. The light transmittance can be measured by a method described in JIS-K7105, namely by measuring a total light transmittance and an amount of scattered light using an integrating sphere type light transmittance analyzer and subtracting the diffuse transmittance from the total light transmittance.

Even in the case where the gas barrier film of the invention is used for display use, for example, when it is not disposed on the side of an observer, the transparency is not always required. Accordingly, in such case, an opaque material can also be used as the plastic film. Examples of the opaque material include polyimide, polyacrylonitrile and known liquid crystal polymers.

The thickness of the plastic film to be used for the gas barrier film of the invention is properly chosen depending upon the use and therefore, is not particularly limited. It is typically from 1 to 800 µm, and preferably from 10 to 200 µm. These plastic films may have a functional layer such as a transparent conductive layer and a primer layer. The functional layer is described in detail in paragraphs 0036 to 0038 of JP-A-2006-289627. Examples of functional layers other than these layers include a matting agent layer, a protective layer, an antistatic layer, a smoothening layer, an adhesion improving layer, a light shielding layer, an antireflection layer, a hard coat layer, a stress relaxing layer, an antifogging layer, an antifouling layer, a layer to be printed and an easily adhesive layer.

### (Inorganic Layer)

Not specifically defined, the inorganic layer may be any one comprising an inorganic material and having a gas-barrier property. The inorganic material typically includes oxides, nitrides, oxinitrides, carbides and hydrides of boron, magnesium, aluminium, silicon, titanium, zinc, tin, etc. These may be pure substances or may be mixtures or graded materials of different compositions. Of those, preferred are aluminium oxide, nitride and oxinitride, and silicon oxide, nitride and oxinitride. The thickness of the inorganic layer is not specifically defined. Typically, the thickness preferably falls within a range of from 5 nm/layer to 500 nm/layer, more preferably from 10 nm/layer to 200 nm/layer.

For forming the inorganic layer, employable is any method capable of forming the intended thin film. For example, a sol-gel method, a sputtering method, a vacuum vapor deposition method, an ion-plating method, a plasma CVD method and the like are suitable for it; and concretely, the methods for film formation described in Japanese Patent 3400324, JP-A 2002-322561 and 2002-361774 are usable herein.

In particular, in the case where a film of a silicon compound is formed, preferably employed is a film formation method of any of inductively coupled plasma CVD, or PVD or CVD by plasma with a microwave and a magnetic field applied thereto under a settled electron cyclotron resonance condition. Most preferred is a film formation method of inductively coupled plasma CVD. Inductively coupled plasma CVD, and CVD by plasma with a microwave and a magnetic field applied thereto under a settled electron cyclotron resonance condition (ECR-CVD) may be performed, for example, according to the methods described in CVD Handbook by the Chemical Engineering Society of Japan, p. 284 (1991). PVD by plasma with a microwave and a magnetic field applied thereto under a settled electron cyclotron resonance condition (ECR-PVD) may be performed out, for example, according to the methods described in Ono et al's Jpn. J. Appl. Phys., 23, No. 8. L534 (1984). Regarding the starting materials for the above-mentioned CVD, vapor sources of silane or the like and liquid sources of hexamethyldisilazane or the like may be used as the silicon source.

### (Organic Layer)

The gas barrier film of the invention preferably has an organic layer. At least one organic layer may be provided adjacent to the inorganic layer of an inorganic material in the film for the purpose of enhancing the brashiness of the inorganic layer and the gas-barrier property of the gas barrier film.

The organic layer may be formed according to (1) a method of using an inorganic oxide layer formed by a sol-gel method, or (2) a method of forming a layer of an organic material by coating or vapor deposition and then curing it by UV ray or electron ray. The methods (1) and (2) may be combined; and for example, a thin film is formed on a resin film according to the method (1), and then an inorganic oxide layer is formed, and thereafter a thin film is formed according to the method (2). These methods are described in sequence hereinunder.

### (1) Sol-Gel Method:

The sol-gel method is for producing a dense thin film through metal alkoxide hydrolysis followed by polycondensation preferably in a solution or in a coating film. In this, also usable is an organic/inorganic hybrid material combined with resin.

The metal alkoxide for the sol-gel method include alkoxysilane and/or other metal alkoxides than alkoxysilane. As the other metal alkoxides than alkoxy silane, preferred are zirconium alkoxide, titanium alkoxide, aluminium alkoxide, etc.

The polymer to be used in sol-gel reaction preferably has a hydrogen bond-forming group. Examples of resin having a hydrogen bond-forming group include hydroxyl group-having polymers and their derivatives (polyvinyl alcohol, polyvinyl acetal, ethylene-vinyl alcohol copolymer, phenolic resin, methylolmelamine, and their derivatives); carboxyl group-having polymers and their derivatives (homopolymers and copolymers containing a polymerizing unsaturated acid unit such as poly (meth) acrylic acid, maleic anhydride or itaconic acid, and esters of those polymers (homopolymers or copolymers containing an ester unit of vinyl ester such as vinyl acetate or (meth)acrylate such as methyl methacrylate)); ether bond-having polymers (polyalkylene oxides, polyoxyalkylene glycols, polyvinyl ethers, silicon resins); amido bond-having polymers (N-acylates of polyoxazolines or polyalkyleneimines having an >N (COR) - bond (in which R represents a hydrogen atom, an alkyl group optionally having a substituent, or an aryl group optionally having a substituent)); >NC(O)- bond-having polyvinylpyrrolidones ad their derivatives; urethane bond-having polyurethanes; urea bond-having polymers, etc.

A monomer may be additionally used in sol-gel reaction, and it may be polymerized during or after sol-gel reaction to give an organic/inorganic hybrid material.

In sol-gel reaction, metal alkoxide is hydrolyzed and polycondensed in water and an organic solvent; and a catalyst is preferably used in this stage. AS the catalyst for hydrolysis, generally used is acid (organic acid or inorganic acid).

The amount of the acid to be used may be from 0.0001 to 0.05 mols per mol of the metal alkoxide (in the case where it contains an alkoxysilane and any other metal alkoxide, its amount is in terms of (alkoxysilane + other metal alkoxide)), preferably from 0.001 to 0.01 mols. After the hydrolysis, a basic compound such as an inorganic base or amine may be added to make the solution have a neutral pH or therearound to thereby promote the subsequent polycondensation.

Also usable is any other sol-gel catalyst, for example, an organic metal compound such as a metal chelate compound having Al, Ti or Zr as the center metal, or a tin compound; a metal salt such as an alkali metal salt of an organic acid. The proportion of the sol-gel catalyst in the composition may be preferably from 0.01 to 50 % by mass of the starting material for sol, alkoxysilane, more preferably from 0.1 to 50 % by mass, even more preferably from 0.5 to 10 % by mass.

The solvent for sol-gel reaction is described. The solvent is for uniformly mixing the constitutive components in sol to thereby control the solid content of the composition and additionally to make the composition applicable to various coating methods, and for improving the dispersion stability and the storage stability of the composition. Not specifically defined, the solvent may be any one capable of attaining the objects. Preferred examples of the solvent are water, and organic solvents highly miscible with water.

For the purpose of controlling the sol-gel reaction speed, an organic compound with a possibility of polydentate configuration may be added to thereby stabilize the metal alkoxide. Examples of the organic compound with a possibility of polydentate configuration include β-diketones and/or β -ketoesters, and alkanolamines.

Specific examples of β-diketones and/or β-ketoesters include acetylacetone, methyl acetacetate, ethyl acetacetate, n-propyl acetacetate, i-propyl acetacetate, n-butyl acetacetate, sec-butyl acetacetate, tert-butyl acetacetate, 2,4-hexane-dione, 2,4-heptane-dione, 3,5-heptane-dione, 2,4-octane-dione, 2,4-nonane-dione, 5-methylhexane-dione, etc. Of those, preferred are ethyl acetacetate and acetylacetone; and more preferred is acetylacetone. One or more these β-diketones and/or β-ketoesters may be used herein either singly or as combined.

In the case where the above-mentioned metal chelate compound is used as the sol-gel catalyst, the compound with a possibility of polydentate configuration may be used for controlling the reaction speed.

A method for forming a coating film of the sol-gel reaction composition is described. The sol may be coated onto a transparent film according to a coating method of curtain flow coating, dipping, spin coating or roll coating, thereby forming a thin film thereon. In this case, the timing of hydrolysis may be any time during the film formation process. For example, preferably employed are a method of previously hydrolyzing a liquid of the necessary composition for partial condensation to prepare the intended sol, then applying it onto a film and drying it thereon; a method of preparing a liquid of the necessary composition and applying it onto a film simultaneously with hydrolyzing it for partial condensation and drying it; and a method of coating and primary drying followed by applying a water-containing liquid necessary for hydrolysis to attain hydrolysis. Various coating methods may be employed; and in the case where the producibility is regarded as important, preferred for it is a method comprising controlling the flow rate of both the upper layer coating liquid and the lower layer coating liquid on a Giesser-type slide having a multilayer jetting mouth to the necessary coating level, and continuously applying the formed multilayer flow onto a support and drying it thereon (method of simultaneous multilayer formation).

After the coating operation, the drying temperature is preferably from 150 to 350°C, more preferably from 150 to 250°C, even more preferably from 150 to 200°C.

For more densifying the dried coating film, it may be irradiated with energy rays. The radiation source is not specifically defined. In consideration of its influence on deformation and degradation of supports, especially preferred is irradiation with UV rays or electron rays or microwaves. The radiation dose may be from 30 mJ/cm² to 500 mJ/cm², preferably from 50 mJ/cm² to 400 mJ/cm². The irradiation temperature may widely vary with no limitation within a range of from room temperature to the deformation temperature of support and is preferably from 30°C to 150°C, more preferably from 50°C to 130°C.

### (2) Method of layer formation of organic material by coating or vapor deposition followed by curing it by UV ray or electron ray:

A method of forming an organic layer comprising, as the main ingredient thereof, a polymer produced by crosslinking a polymerizing compound is described.

### (Polymerizing Compound)

The polymerizing compound for use in the invention is a compound having an ethylenic unsaturated bond at the terminal or in the side chain thereof, and/or a compound having epoxy or oxetane at the terminal or in the side chain thereof. Of those, preferred is a compound having an ethylenic unsaturated bond at the terminal or in the side chain thereof. Examples of the compound having an ethylenic unsaturated bond at the terminal or in the side chain thereof include (meth)acrylate compounds (acrylate and methacrylate are expressed as (meth)acrylate as combined), acrylamide compounds, styrene compound, maleic anhydride, etc.

As (meth)acrylate compounds, preferred are (meth)acrylates, urethane-(meth)acrylates, polyester-(meth)acrylates, epoxy(meth)acrylates, etc.

As styrene compounds, preferred are styrene, α-methylstyrene, 4-methylstyrene, divinylbenzene, 4-hydroxystyrene, 4-carboxystyrene, etc.

Specific examples of (meth)acrylate compounds are mentioned below, to which, however, the invention should not be limited.

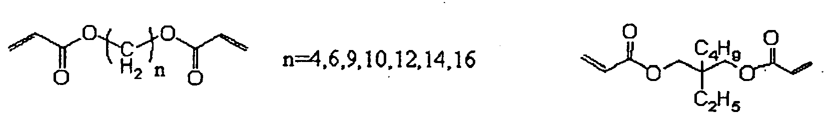

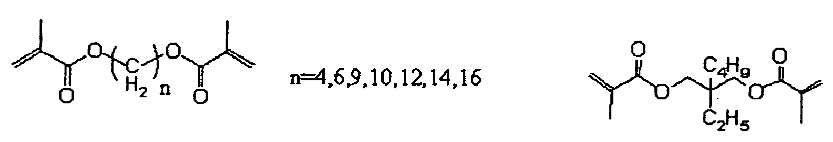

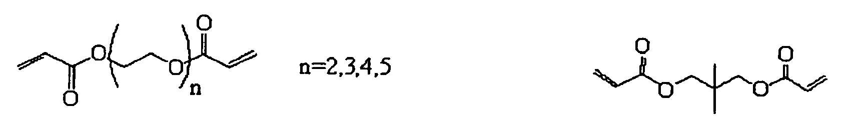

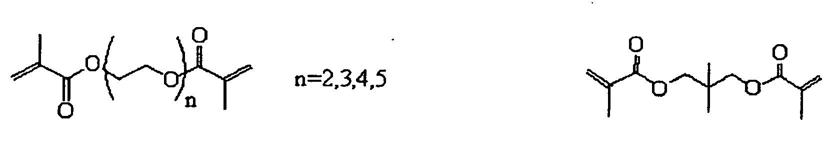

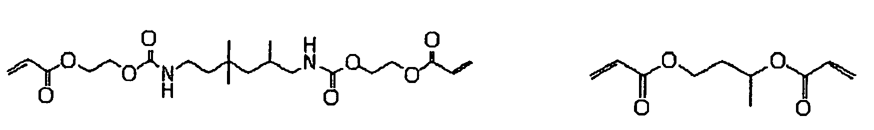

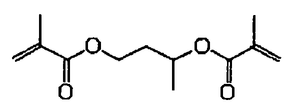

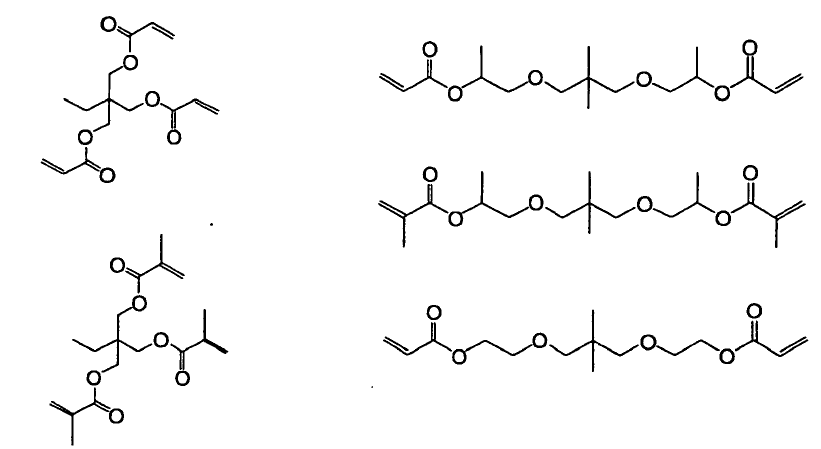

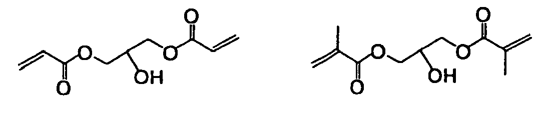

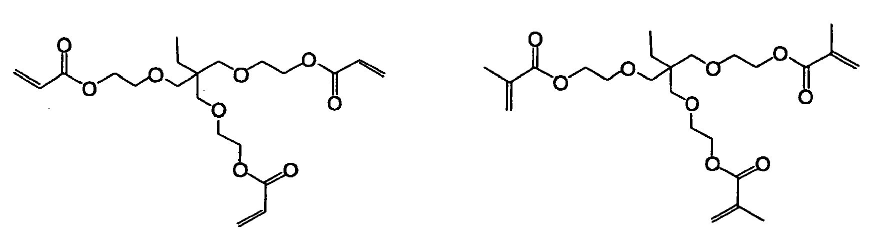

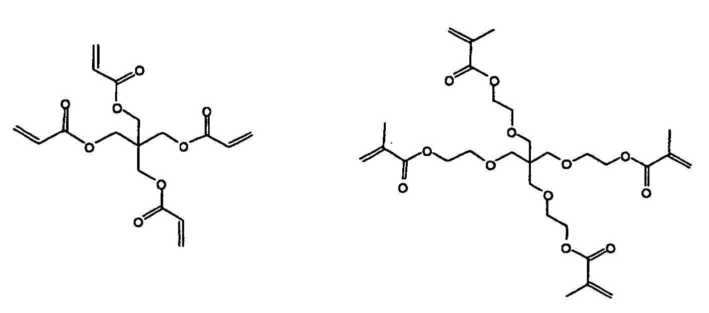

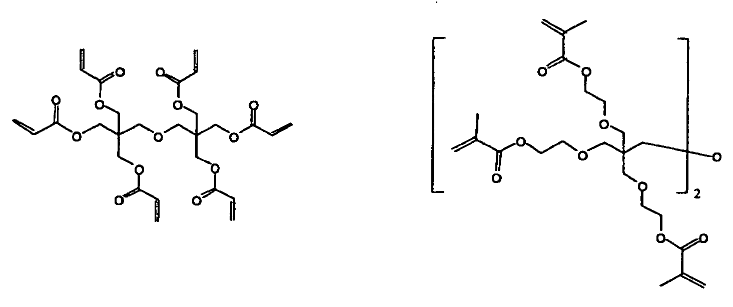

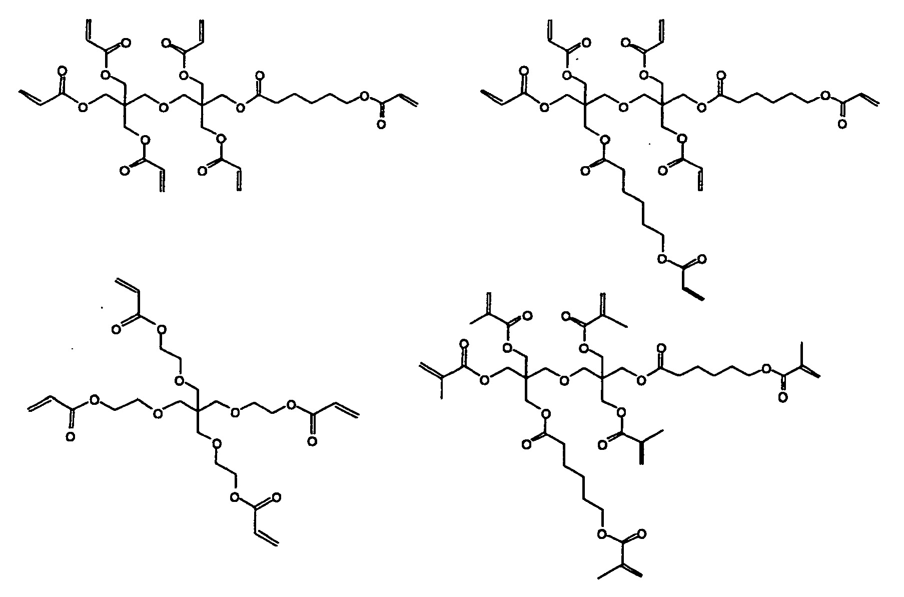

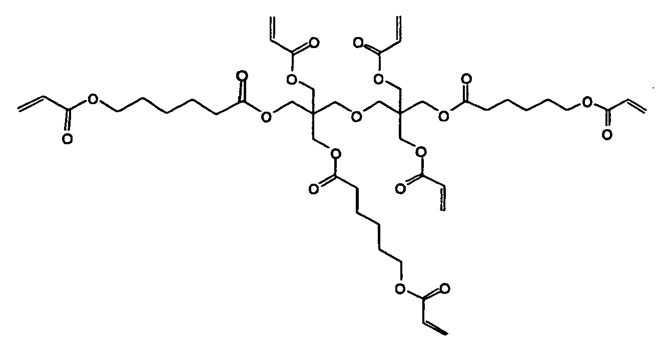

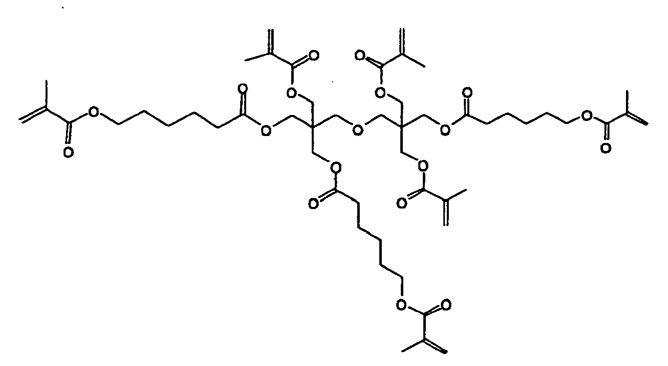

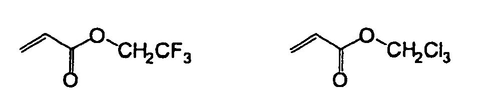

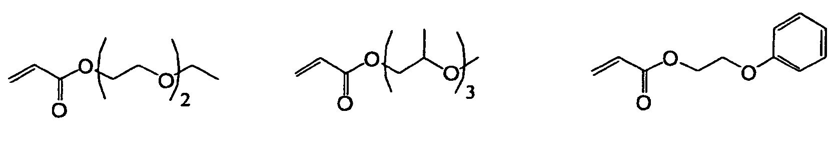

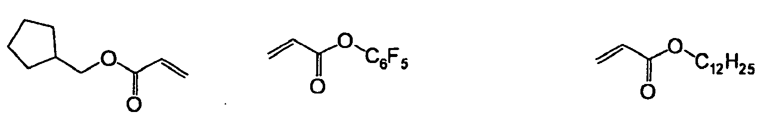

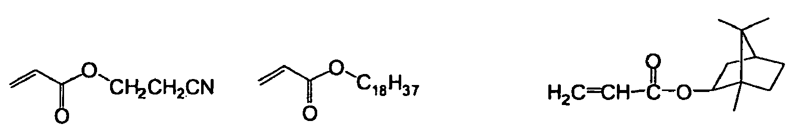

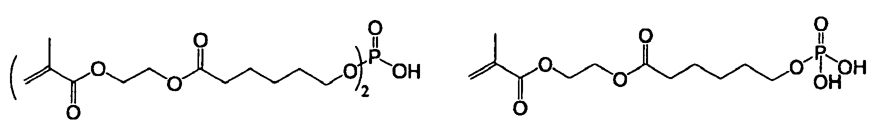

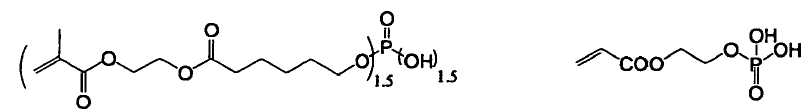

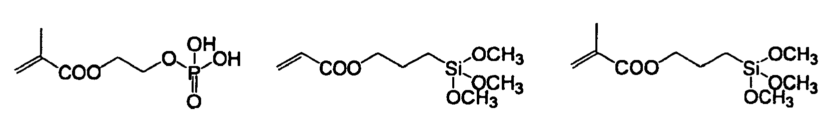

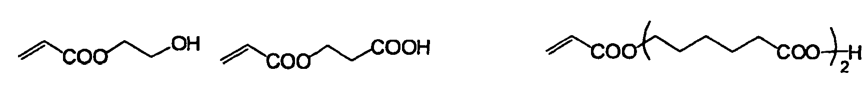

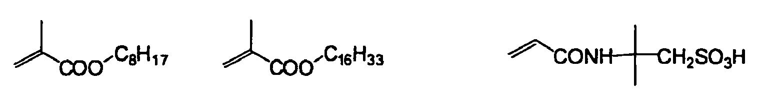

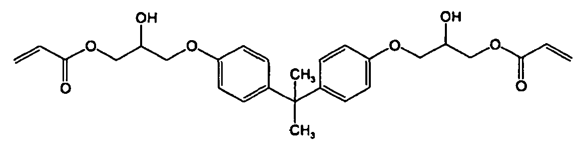

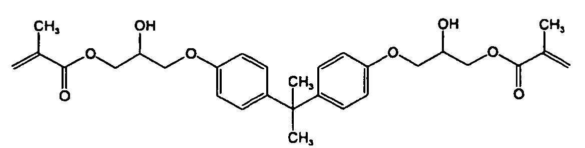

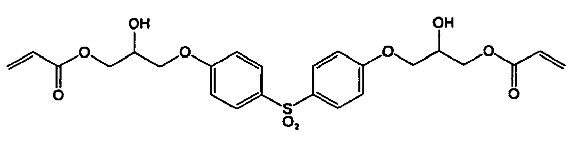

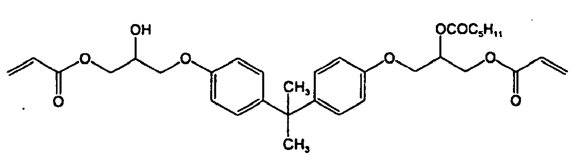

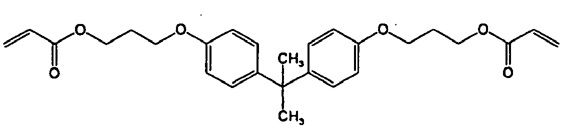

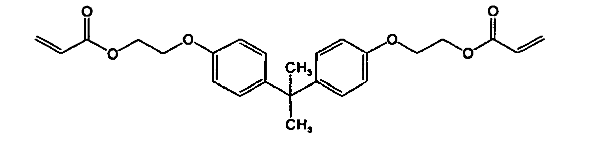

### (Method of crosslinking of polymerizing compound)

In the invention, the above-mentioned polymerizing compound is polymerized and cured through irradiation with heat or various energy rays, thereby forming an organic layer comprising a polymer as the main ingredient thereof. Examples of energy rays include UV rays, visible rays, IR rays, electron rays, X rays, gamma rays, etc. In the case where the compound is polymerized by heat, then a thermal polymerization initiator may be used; where it is polymerized with UV rays, then a photopolymerization initiator may be used; and where it is polymerized with visible rays, then a photopolymerization initiator and a sensitizer may be used. Of the above, preferred is a method of polymerizing and crosslinking a polymerizing compound in the presence of a photopolymerization initiator.

### (Polymerization initiator)

The polymerizing composition in the invention may contain a polymerization initiator as so mentioned in the above. In the case where a photopolymerization initiator is used, its amount is preferably at least 0.1 mol% of the total amount of the polymerizing compound, more preferably from 0.5 to 2 mol%. By setting the thus-designed composition, polymerization reaction though an active ingredient forming reaction may be suitably controlled. Examples of the photopolymerization initiator include Ciba Speciality Chemicals' commercial products, Irgacure series (e.g., Irgacure 651, Irgacure 754, Irgacure 184, Irgacure 2959, Irgacure 907, Irgacure 369, Irgacure 379, Irgacure 819), Darocure series (e.g., Darocure TPO, Darocure 1173), Quantacure PDO; Sartomer's commercial products, Ezacure series (e.g., Ezacure TZM, Ezacure TZT), etc.

### (Method of formation of organic layer)

The method for forming the organic layer is not specifically defined. For example, the layer may be formed according to a solution coating method or a vacuum film formation method. The solution coating method is, for example, a dipping method, an air knife coating method, a curtain coating method, a roller coating method, a wire bar coating method, a gravure coating method, a slide coating method, or an extrusion coating method using a hopper as in USP 2681294. The vacuum film formation method is not specifically defined, but is preferably a film formation method by vapor deposition or plasma CVD. In the invention, the polymer may be applied for coating as its solution, or a hybrid coating method along with an inorganic material, as in JP-A 2000-323273 and 2004-25732, may also be used.

The light for irradiation is generally a UV ray from a high-pressure mercury lamp or low-pressure mercury lamp. The radiation energy is preferably at least 0.5 J/cm², more preferably at least 2 J/cm². Acrylate and methacrylate may suffer from interference in polymerization owing to oxygen in air, and therefore, in their polymerization, the oxygen concentration or the oxygen partial pressure is preferably lowered. For this, employable is an inert gas purging method, (nitrogen purging method, argon purging method) or a pressure reduction method. Of those, a curing method under reduced pressure is more preferred as effective for lowering the dissolved oxygen concentration in monomer.

In the case where the oxygen concentration in polymerization is lowered according to a nitrogen purging method, the oxygen concentration is preferably at most 2 %, more preferably at most 0.5 %. In the case where the oxygen partial pressure in polymerization is lowered by a pressure reduction method, the whole pressure is preferably at most 1000 Pa, more preferably at most 100 Pa. Especially preferred is UV polymerization with at least 2 J/cm² energy radiation under a condition of reduced pressure of at most 100 Pa. Most preferably, a monomer film formed according to a flash vapor deposition method is UV-polymerized with energy radiation of at least 2 J/cm² under a reduced pressure condition. According to this method, the rate of polymerization is enhanced, and an organic layer having a high hardness can be produced. Enhancement of the rate of polymerization by polymerizing under reduced pressure is supported by Examples given hereinunder. Preferably, monomer polymerization is performed after a monomer mixture is disposed in a predetermined site by coating or vapor deposition.

Preferably, the rate of polymerization of monomer is at least 85 %, more preferably at least 88 %, even more preferably at least 90 %, still more preferably at least 92 %. The rate of polymerization as referred to herein means the ratio of the reacted polymerizing group to all the polymerizing group (acryloyl group and methacryloyl group) in the monomer mixture. The rate of polymerization may be quantitatively determined according to IR absorptiometry.

The thickness of the organic layer is not specifically defined. However, when the layer is too thin, then its thickness could hardly keep uniformity; but when too thick, the layer may be cracked by external force applied thereto and its barrier-property may lower. From these viewpoints, the thickness of the organic layer is preferably from 50 nm to 2000 nm, more preferably from 200 nm to 1500 nm.

As so mentioned in the above, the organic layer is preferably smooth. Regarding the smoothness of the organic layer, the mean roughness (Ra) of 10 µm² of the layer is preferably at most 2 nm, more preferably at most 1 nm. The surface of the organic layer is required not to have impurities and projections such as particles. Accordingly, it is desirable that the organic layer is formed in a clean room. The degree of cleanness is preferably at most class 10000, more preferably at most class 1000.

Preferably, the hardness of the organic layer is higher. It is known that, when the hardness of the organic layer is high, then the inorganic layer may be formed smoothly and, as a result, the barrier level of the gas barrier film is thereby improved. The hardness of the organic layer may be expressed as a microhardness based on a nano-indentation method. The microhardness of the organic layer is preferably at least 150 N/mm, more preferably at least 180 N/mm, even more preferably at least 200 N/mm.

Two or more organic layers may be laminated. In this case, each layer may have the same composition or may have different compositions. In the case where two or more organic layers are laminated, they are preferably so designed that each organic layer could fall within the above-mentioned preferred range. As so mentioned in the above, the organic layer may be included as a layer have a composition continuously changing in the direction of the layer thickness with no definite interface between an organic layer and an inorganic layer, as illustrated in USP-A 2004-46497.

The gas barrier film of the invention may have any other desired functional layers in addition to those mentioned in the above, as disposed between at least two layers of the substrate film, the organic layer and the inorganic layer, or between the gas-barrier layer and the adhesive layer, or on the outermost surface of the film. Examples of the functional layers are the above-mentioned planarizing layer, adhesion improving layer, antireflection layer, etc.

Preferably, the gas barrier film of the invention has a water vapor permeability at 40°C and 90 % RH of at most 0.01 g/m²·day, more preferably at most 0.001 g/m²·day, even more preferably at most 0.0001 g/m²·day.

Also preferably, the thickness of the gas barrier film of the invention is from 10 to 500 µm, more preferably from 50 to 250 µm.

The gas barrier film of the invention may have functional layers such as a transparent conductive layer and a primer layer on one surface or both surfaces thereof. The functional layers are described in detail in JP-A 2006-289627, paragraphs [0036] to [0038]. Examples of other functional layers than these are a matting agent layer, a protective layer, an antistatic layer, a planarizing layer, an adhesion improving layer, a light-shielding layer, an antireflection layer, a hard coat layer, a stress-relaxing layer, an antifogging layer, a contamination-resistant layer, a printable layer, etc.

Herein, the protective layer and peeling layer are provided for the purpose of preventing unintended adhesion which occurs in production, storage, transportation, incorporation into the device, and the like, and for the purpose of preventing the gas barrier film from being damaged. The protective layer is a layer which is supposed to be peeled in any one of the steps from the production of the gas barrier film to the completion of the final product. The peeling layer is a layer which is supposed to be incorporated in the final product.

The examples of the protective layer and the peeling layer are described in JP-A-2005-255859, JP-A-2005-247910 and JP-A-2007-83536.

The antistatic agent usable in the invention includes electron-conductive polymers such as polyaniline and polypyrrole; ion-conductive polymers having a carboxyl group or a sulfonic acid group in the molecular chain thereof; and conductive fine particles. Of those, preferred are conductive fine particles, more preferably antimony-doped tin oxide fine particles from the viewpoint of both the conductivity and the transparency. The amount of the antistatic agent to be added is preferably such that the surface resistivity of the film, as measured in an atmosphere at 25°C and 30 % RH, could be from 1 × 10⁵ to 1 × 10¹³ Ω/□ or so. When the surface resistivity is less than 1 × 10⁵Ω/□, then the amount of the antistatic agent added may increase and therefore the transparency of the gas barrier film may lower; but when more than 1 × 10¹³Ω/□, then the antistatic effect may be insufficient and the film may suffer from inconvenience of dust adhesion or the like.

The gas barrier film of the invention is favorably used as a sealing film for display devices. Preferably, the gas barrier film of the invention is used in sealing a display device with its adhesive layer side disposed nearer to the display device. The gas barrier film may be provided to both sides of a display device, or may be provided to one side thereof. The display device in the invention includes a circularly polarizing plate, a liquid crystal display device, a touch panel, an organic EL device, etc.

### (Circularly polarizing plate)

The circularly polarizing plate can be prepared by laminating a λ/4 plate and a polarizing plate on the gas barrier film of the invention. In that case, the both plates are laminated in such a manner that a slow axis of the λ/4 plate and an absorption axis of the polarizing plate form 45°. As such a polarizing plate, one stretched in a direction of 45° against the machine direction (MD) thereof is preferably used, and those described in, for example, JP-A-2002-865554 can be favorably used.

### (Liquid crystal display device)

The reflection type liquid crystal display device is configured to include a lower substrate, a reflection electrode, a lower alignment film, a liquid crystal layer, an upper alignment film, a transparent electrode, an upper substrate, a λ/4 plate and a polarizing film in order from the lower side. The gas barrier film of the invention can be used as the transparent electrode and the upper substrate. In the case of giving a color displaying function to the reflection type liquid crystal display device, it is preferable to further provide a color filter layer between the reflection electrode and the lower alignment film or between the upper alignment film and the transparent electrode.

Also, the transmission type liquid crystal display device is configured to include a backlight, a polarizing plate, a λ/4 plate, a lower transparent electrode, a lower alignment film, a liquid crystal layer, an upper alignment film, an upper transparent electrode, an upper substrate, a λ/4 plate and a polarizing plate in order from the lower side. Of these, the gas barrier film of the invention can be used as the upper transparent electrode and the upper substrate. Also, in the case of giving a color displaying function to the transmission type liquid crystal display device, it is preferable to further provide a color filter layer between the lower transparent electrode and the lower alignment film or between the upper alignment film and the upper transparent electrode.

Though the structure of the liquid crystal layer is not particularly limited, it is preferably of, for example, a TN (twisted nematic) type, an STN (super twisted nematic) type, an HAN (hybrid aligned nematic) type, a VA (vertically alignment) type, an ECB (electrically controlled birefringence) type, anOCB (optically compensated bend) type, a CPA (continuous pinwheel alignment) type or an IPS (in-plane switching) type.

### (Touch panel)

As the touch panel, one obtained by applying the gas barrier film of the invention onto a substrate described in, for example, JP-A-5-127822 or JP-A-2002-48913 can be used.

### <Organic EL device>

An "organic EL device" means an organic electroluminescent device. The gas barrier film of the invention preferably employed as a sealing film of the organic EL device. The organic EL device has a cathode and an anode on a substrate and has an organic compound layer including an organic light-emitting layer between the both electrodes. In view of properties of the light-emitting device, it is preferable that at least one electrode of the anode and the cathode is transparent.

In the invention, an embodiment of the laminate of the organic compound layer is preferably an embodiment in which a hole transport layer, a light-emitting layer and an electron transport layer are laminated in order from the anode side. Furthermore, a charge blocking layer may be provided between the hole transport layer and the light-emitting layer or between the light-emitting layer and the electron transport layer. A hole injection layer may be provided between the anode and the hole transport layer; and an electron injection layer may be provided between the cathode and the electron transport layer. Each of the layers may be divided into plural secondary layers.

Hereinafter, each element constituting the organic EL device is described in detail.

### Substrate

As the substrate for use in the organic EL device of the invention, usable is a substrate for use in known organic EL devices. The substrate may be resin film or gas barrier film. Also, preferably used is gas barrier film described in JP-A-2004-136466, JP-A-2004-148566, JP-A-2005-246716 and JP-A-2005-262529.

The thickness of the substrate for use in the invention is not specifically limited, and is preferably 30 µm to 700 µm, more preferably 40 µm to 200 µm, further more preferably 50 µm to 150 µm. In each case, the haze value of the substrate is preferably 3 % or less, more preferably 2 % or less, and further more preferably 1 % or less. The all transmission of the substrate is preferably 70 % or more, more preferably 80 % or more, and further more preferably 90 % or more.

### (Anode)

In general, the anode may have a function as an electrode capable of supplying a hole into the organic compound layer and is not particularly limited as to its shape, structure and size or the like. The anode can be properly chosen among known electrode materials depending upon the use and purpose of the light-emitting device. As described previously, the anode is usually provided as a transparent anode. The transparent anode is described in detail in New Developments of Transparent Conducting Films, supervised by SAWADA, Yutaka (published by CMC Publishing Co., Ltd., 1999). In the case of using a plastic base material with low heat resistance, a transparent anode obtained through fabrication at a low temperature of not higher than 150 °C using ITO or IZO is preferable.

### (Cathode)

In general, the cathode may have a function as an electrode capable of injecting an electron into the organic compound layer and is not particularly limited as to its shape, structure and size or the like. The cathode can be properly chosen among known electrode materials depending upon the use and purpose of the light-emitting device.

As materials constituting the cathode, for example, metals, alloys, metal oxides, electric conductive materials or mixtures thereof can be exemplified. Specific examples thereof include alkaline earth metals (for example, Mg and Ca), gold, silver, lead, aluminum, a sodium-potassium alloy, a lithium-aluminum alloy, a magnesium-silver alloy, indium and rare earth metals (for example, ytterbium). Though these materials may be used singly, from the standpoint of making stability and electron injection properties compatible with each other, two or more kinds of these materials can be favorably used in combination.

Of these, in view of electron injection properties, the material constituting the cathode is preferably an alkali metal or an alkaline earth metal; and in view of excellent storage stability, the material constituting the cathode is preferably a material composed mainly of aluminum.

The material composed mainly of aluminum refers to aluminum alone or an alloy of aluminum and from 0.01 to 10% by mass of an alkali metal or an alkaline earth metal or a mixture thereof (for example, a lithium-aluminum alloy and a magnesium-aluminum alloy). The cathode material is described in detail in JP-A-2-15595 and JP-A-5-121172. Also, a dielectric layer composed of a fluoride or oxide of an alkali metal or alkaline earth metal or the like may be inserted in a thickness of from 0.1 to 5 nm between the cathode and the organic compound layer. This dielectric layer can be considered as a certain kind of the electron injection layer.

The thickness of the cathode can be properly chosen depending upon the material constituting the cathode and cannot be unequivocally defined. However, the thickness of the cathode is in general from about 10 nm to 5 µm, and preferably from 50 nm to 1 µm.

Also, the cathode may be transparent or opaque. The transparent cathode can be formed by thinly fabricating the cathode material in a thickness of from 1 to 10 nm and further laminating a transparent conductive material such as ITO and IZO thereon.

### (Organic compound layer)

The organic electroluminescent device of the invention has at least one organic compound layer including a light-emitting layer. As described previously, examples of other organic compound layers than the organic light-emitting layer include respective layers such as a hole transport layer, an electron transport layer, a charge blocking layer, a hole injection layer and an electron injection layer.

### Organic light-emitting layer

The organic light-emitting layer is a layer having a function such that at the time of application of an electric field, it receives a hole from the anode, the hole injection layer or the hole transport layer and receives an electron from the cathode, the electron injection layer or the electron transport layer to provide a field of recombination of the hole and the electron, thereby achieving light emission. The light-emitting layer may be constituted of only a light-emitting material or may be configured as a mixed layer of a host material and a light-emitting material. The light-emitting material may be a fluorescent light-emitting material or a phosphorescent light-emitting material; and a dopant may be a single material or a combination of two or more kinds of materials. The host material is preferably a charge transport material. The host material may be a single material or a combination of two or more kinds of materials, and examples thereof include a constitution of a mixture of an electron transporting host material and a hole transporting host material. Furthermore, the light-emitting layer may contain a material which does not have charge transporting properties and does not emit light. Also, the light-emitting layer may be a single layer or may be configured of two or more layers, and the respective layers may emit light in a different luminescent color.

Examples of the fluorescent light-emitting material which can be used in the invention include compounds, for example, benzoxazole derivatives, benzimidazole derivatives, benzothiazole derivatives, styrylbenzene derivatives, polyphenyl derivatives, diphenylbutadiene derivatives, tetraphenylbutadiene derivatives, naphthalimide derivatives, coumarin derivatives, condensed aromatic compounds, perynone derivatives, oxadiazole derivatives, oxazine derivatives, aldazine derivatives, pyralidine derivatives, cyclopentadiene derivatives, bisstyrylanthracene derivatives, quinacridone derivatives, pyrrolopyridine derivatives, thiadiazolopyridine derivatives, cyclopentadiene derivatives, styrylamine derivatives, diketopyrrolopyrrole derivatives, aromatic dimethylidyne derivatives, various metal complexes represented by metal complexes of 8-quinolinol derivatives and pyrromethene derivatives, polymer compounds (for example, polythiophene, polyphenylene and polyphenylenevinylene) and organosilane derivatives.

Examples of the phosphorescent light-emitting material include complexes containing a transition metal atom or a lanthanoid atom.

The transition metal atom is not particularly limited, and preferred examples thereof include ruthenium, rhodium, palladium, tungsten, rhenium, osmium, iridium and platinum, with rhenium, iridium and platinum being more preferable.

Examples of the lanthanoid atom include lanthanum, cerium, praseodymium, neodymium, samarium, europium, gadolinium, terbium, dysprosium, holmium, erbium, thulium, ytterbium and lutetium. Of these lanthanoid atoms, neodymium, europium and gadolinium are preferable.

Examples of a ligand of the complex include ligands described in G. Wilkinson, et al., Comprehensive Coordination Chemistry, published by Pergamon Press, 1987; H. Yersin, Photochemistry and Photophysics of Coordination Compounds, published by Springer-Verlag, 1987; and YAMAMOTO, Akio, Organometallic Chemistry - Principles and Applications, published by Shokabo Publishing Co., Ltd., 1982.

Also, examples of the host material which is contained in the light-emitting layer in the invention include materials as enumerated in the following paragraphs of hole injection layer, hole transport layer, electron injection layer and electron transport layer as well as a material having a carbazole skeleton, a material having a diarylamine skeleton, a material having a pyridine skeleton, a material having a pyrazine skeleton, a material having a triazine skeleton and a material having an arylsilane skeleton. Hole injection layer and hole transport layer

The hole injection layer and the hole transport layer are each a layer having a function to receive a hole from the anode or the anode side to transport it into the cathode side. Specifically, the hole injection layer and the hole transport layer are each preferably a layer containing a carbazole derivative, a triazole derivative, an oxazole derivative, an oxadiazole derivative, an imidazole derivative, a polyarylalkane derivative, a pyrazoline derivative, a pyrazolone derivative, a phenylenediamine derivative, an arylamine derivative, an amino-substituted chalcone derivative, a styrylanthracene derivative, a fluorenone derivative, a hydrazone derivative, a stilbene derivative, a silazane derivative, an aromatic tertiary amine compound, a styrylamine compound, an aromatic dimethylidene based compound, a porphyrin based compound, an organosilane derivative, carbon or the like. Electron injection layer and electron transport layer

The electron injection layer and the electron transport layer are each a layer having a function to receive an electron from the cathode or the cathode side to transport it into the anode side. Specifically, the electron injection layer and the electron transport layer are each preferably a layer containing a triazole derivative, an oxazole derivative, an oxadiazole derivative, an imidazole derivative, a fluorenone derivative, an anthraquinodimethane derivative, an anthrone derivative, a diphenylquinone derivative, a thiopyran dioxide derivative, a carbodiimide derivative, a fluorenylidenemethane derivative, a distyrylpyrazine derivative, aromatic ring tetracarboxylic acid anhydrides of naphthalene, perylene, etc., a phthalocyanine derivative, a metal complex of every kind represented by metal complexes of 8-quinolinol derivatives and metal complexes composed of, as a ligand, metal phthalocyanine, benzoxazole or benzothiazole, an organosilane derivative or the like.

### Hole blocking layer

The hole blocking layer is a layer having a function to prevent a phenomenon in which the hole which has been transported into the light-emitting layer from the anode side passes through into the cathode side from occurring. In the invention, the hole blocking layer can be provided as an organic compound layer which is positioned adjacent to the light-emitting layer on the cathode side.

Examples of an organic compound constituting the hole blocking layer include aluminum complexes such as BAlq, triazole derivatives and phenanthroline derivatives such as BCP. Also, a layer having a function to prevent a phenomenon in which the electron which has been transported into the light-emitting layer from the cathode side passes through into the anode side from occurring may be provided on the position adjacent to the light-emitting layer on the anode side. The hole injection layer and hole transport layer may serve this function.

### Solar Cell

The gas barrier film of the invention can be used also as a sealing film for solar cell devices. Preferably, the gas barrier film of the invention is used for sealing a solar cell device in such a manner that its adhesive layer is on the side near to the solar cell device. The solar cell devices for which the gas barrier film of the invention is favorably used are not specifically defined. For example, they include single crystal silicon-based solar cell devices, polycrystalline silicon-based solar cell devices, single-junction or tandem-structure amorphous silicon-based solar cell devices, gallium-arsenic (GaAs), indium-phosphorus (InP) or the like III-V Group compound semiconductor-based solar cell devices, cadmium-tellurium (CdTe) or the like II-VI Group compound semiconductor-based solar cell devices, copper/indium/selenium (CIS-based), copper/indium/gallium/selenium (CIGS-based), copper/indium/gallium/selenium/sulfur (CIGSS-based) or the like I-III-VI Group compound semiconductor-based solar cell devices, dye-sensitized solar cell devices, organic solar cell devices, etc. Above all, in the invention, the solar cell devices are preferably copper/indium/selenium (CIS-based), copper/indium/gallium/selenium (CIGS-based), copper/indium/gallium/selenium/sulfur (CIGSS-based) or the like I-III-VI Group compound semiconductor-based solar cell devices.

### Examples

The characteristic features of the invention are hereunder described in more detail with reference to the following Examples. Materials, use amounts, proportions, treatment contents, treatment procedures and the like shown in the following Examples can be properly changed. Accordingly, the scope of the invention should not be limitedly construed by the following specific examples.

### Fabrication of Gas-Barrier Film:

On one surface of a substrate film, disposed were an inorganic layer, an organic layer, an inorganic layer, an organic layer, an inorganic layer, an organic layer, an inorganic layer and an adhesive layer in that order, thereby fabricating gas barrier films of Examples 1 to 5. As Comparative Examples 1 and 2, fabricated were gas barrier films with no adhesive layer. The methods for forming the constitutive layers and the materials for them are described. Substrate Film:

As the substrate film, used was a polyethylene terephthalate film (PET, having a thickness of 100 µm, Toray's Lumirror T60), or a polyethylene naphthalate film (PEN, having a thickness of 100 µm, Teijin-DuPont's Q65A). In Examples 1 and 4 to 6, the substrate film having a peeling layer as described below was employed, and layers to be laminated were provided on the side opposite to the side in which the antistatic layer and peeling layer were provided.

One surface of the above Q65A, the coating solution which was a mixture of latex composed of styrene-butadiene copolymer (LX407C5, Nihon Zeon Corp.) and composite oxide composed of tin oxide and antimony oxide (FS-10D, Ishihara Sangyo Kaisha Ltd.) at the mass ratio of 5: 5, was coated so that the thickness of the film after dried is 200 nm, and thereby forming the antistatic layer. On the antistatic layer, the coating solution which was prepared by adding 13 parts by mass of additional reaction type silicone (Shin-Etsu Chemical Co., Ltd., KS-847, silicone concentration is 30 % by weight) and 0.3 parts by mass of platinum curing catalyst (Shin-Etsu Chemical Co., Ltd., PL-50T) into a mixture solvent of 40 parts by mass of toluene and 47 parts by mass of methyl ethyl ketone was coated, and heated and cured, and thereby forming the peeling layer having a thickness of 500 nm.

### Formation of Inorganic Layer:

Using a reactive sputtering apparatus, an inorganic layer of aluminium oxide was formed. Concretely, the pressure in the vacuum chamber of the reactive sputtering apparatus was reduced to an ultimate vacuum degree of 5 × 10⁻⁴ Pa. Next, argon was introduced into it as a plasma gas; and a power of 2000 W was applied to it from a plasma source. A high-purity oxygen gas was introduced into the chamber, and the film formation pressure was controlled at 0.3 Pa for a predetermined period of time to form an inorganic layer of aluminium oxide. Thus formed, the aluminium oxide film had a thickness of 50 nm and a film density of 3.01 g/cm³.

### Formation of Organic Layer:

The organic layer was formed according to two different methods of a solution-coating film formation method under normal pressure (organic layer X) and a flash vapor deposition method under reduced pressure (organic layer Y).

### (X) Film Formation by solution coating under normal pressure:

9 g of a photopolymerizing acrylate, tripropylene glycol diacrylate (TPGDA, by Daicel Sytec) and 0.1 g of a photopolymerization initiator (Ciba Specialty Chemicals' Irgacure 907) were dissolved in 190 g of methyl ethyl ketone to prepare a coating solution. The coating solution was applied onto a substrate film, using a wire bar, and then irradiated with UV rays at an illuminance of 350 mW/cm² and at a radiation dose of 500 mJ/cm², using an air-cooling metal halide lamp of 160 W/cm (by Eyegraphics) with nitrogen purging to an oxygen concentration of at most 0.1 %, thereby forming an organic layer (X). The film thickness was about 500 nm. Tg of the film was 90°C.

### (Y) Film Formation by flash vapor deposition under reduced pressure:

9.7 g of a photopolymerizing acrylate, butylethylpropanediol diacrylate (BEPGA, by Kyoei Chemical) and 0.3 g of a photopolymerization initiator (Lambertispa's Ezacure-TZT) were mixed to prepare a vapor deposition liquid. The vapor deposition liquid was applied onto a substrate film for vapor deposition thereon, according to a flash vapor deposition method under a condition of inner pressure of 3 Pa in the vacuum chamber. Next, under the same vacuum degree condition, this was irradiated with UV rays at a radiation dose of 2 J/cm², thereby forming an organic layer. The film thickness was about 1200 nm. For forming an organic layer Z-1, used was an organic/inorganic laminate film formation device, Guardian 200 (by Vitex Systems). Tg of the film was 106°C. Fabrication of gas barrier Film:

The above-mentioned inorganic layer, organic layer and adhesive layer were formed in order on a substrate film, thereby fabricating gas barrier films each having a layer constitution as in Table 1 below. The films were fabricated according to two methods mentioned below.

### (A) Method of repeating organic layer formation by solution coating and inorganic layer formation under reduced pressure (lamination A):

An organic layer and an inorganic layer were alternately laminated on a substrate film. An inorganic layer was laminated on an organic layer as follows: An organic layer was first formed by solution coating, and then this was put into a vacuum chamber, in which the pressure was reduced to a vacuum degree of at most 10⁻³ Pa. This was kept in the chamber for a predetermined period of time, and then an inorganic layer was formed on it. An organic layer was laminated on the inorganic layer as follows: Immediately after the formation of the inorganic layer, an organic layer was formed thereon according to a solution coating method. In Example 4, the film was fabricated according to the method of this embodiment.

### (B) Method of continuous formation of organic layer and inorganic layer under reduced pressure (lamination B):

Using the above-mentioned organic/inorganic laminate film formation apparatus, Guardian 200, an organic layer and an inorganic layer were laminated. In this apparatus, both the organic layer and the inorganic layer are formed in a reduced pressure environment, and the film formation chambers for organic layer and inorganic layer are connected to each other. In this, therefore, the two layers could be continuously formed in a reduced pressure environment. Accordingly, the film is not exposed to air until the completion of barrier film formation. In Comparative Examples 1 and 2 and in Examples 1, 2, 3 and 5, the films were fabricated according to the method of this embodiment.

In Example 1, the photopolymerizing acrylate for the organic layer was replaced to 20 g of the following compound and the others were the same (Example 6).

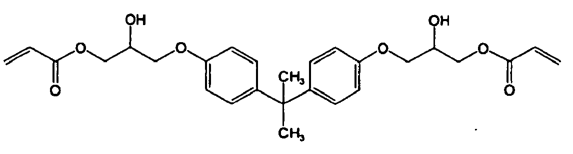

### Adhesive layer

### (A) thermosetting adhesive layer

The thermosetting adhesive used in the above Examples 1, 2, 4 and 5 was 20X-325C, which is manufactured by Three Bond Co., Ltd. and has an adhesive temperature of 90 °C. In the Comparative Examples 1 and 2, the same adhesive was used.

### (B) UV-curable adhesive layer

As to the UV-curable adhesive layer used in Example 3, the adhesive coating solution was prepared by the following method, and the adhesive layer was formed by coating the solution.

### (Preparation of binder 1)

159 g of 1-methoxy-2-propanol was put into a 1,000-mL three-neck flask, and heated up to 85°C in a nitrogen flow atmosphere. To this, a solution of 63.4 g of benzyl methacrylate, 72.3 g of methacrylic acid and 4.15 g of V-601 (by Wako Pure Chemicals) in 159 g of 1-methoxy-2-propanol was dropwise added, taking 2 hours. After the addition, this was further heated for 5 hours and reacted. Next, the heating was stopped, and a copolymer of benzyl methacrylate/methacrylic acid (30/70 % by mol) was thus obtained.

Next, 120.0 g of the copolymer solution was transferred into a 300 mL three-neck flask, and 16.6 g of glycidyl methacrylate and 0.16 g of p-methoxyphenol were added thereto, and dissolved by stirring. After thus dissolved, 3.0 g of triphenyl phosphine was added to it, and heated at 100°C for addition reaction. The disappearance of glycidyl methacrylate was confirmed by gas chromatography, and the heating was stopped. 38 g of 1-methoxy-2-propanol was added to it, thereby preparing a solution of 30 mass % of binder 1, having an acid value of 112 mg KOH/g and a mass-average molecular weight of 15,000.

### (Composition of preliminary dispersion liquid)

To 100 mas. Pts. of solution of binder 1, the followings are added.

| | |
|---|---|
| Dipentaerythritol hexaacrylate | 13 mas.pts. |
| Photopolymerization initiator of the following formula I-1 | 5.0 mas.pts. |
| Sensitizer of the following formula S-1 | 0.8 mas.pts. |
| Epotote YD-8125 (having an epoxy equivalent of 170 g/eq. , Tohto Kasei's bisphenol A-based epoxy resin) | 8 mas.pts. |
| Dicyandiamide | 0.5 mas.pts. |
| Pigment dispersion composed of the following (a), (b) and (C) | 80.21 mas.pts. |
| (a) Methyl ethyl ketone solution of 30 mas.% Megafac F-780F (by Dai-Nippon Ink) | 1.5 mas.pts. |
| (b) Methyl ethyl ketone | 91 mas.pts. |
| (c) 1,2,3-Benzotriazole | 7.5 mas.pt. |

### <Photopolymerization Initiator>

I-1, the following compound (oxime ester compound):

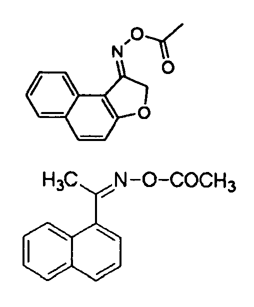

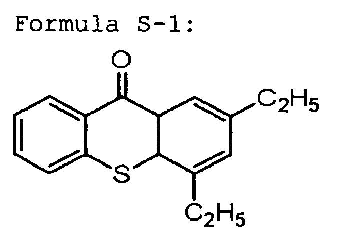

### (Preparation of dispersion liquid)

To 30.2 parts by mass of the above preliminary dispersion liquid, 10.0 parts by mass of barium sulfate (Sakai Chemical Industry Co. , Ltd, B30) as a filler, was added, and further 0.38 parts by mass of dicyandiamide, and 23.9 parts by mass of normal propyl acetate were added, and then dispersing it along with zirconia beads having a diameter of 1.0 mm, using a motor mill M-250 (by Iger) at a peripheral speed of 9 m/sec for 3 hours.

### (The protective layer)

Polyethylene film having a thickness of 25 µm as a protective film was provided on the surface of the adhesive layer of Example 2 or 3.

The layer structures of Examples and Comparative examples were as follows;
Examples 2 and 3 : Substrate film / inorganic layer / organic layer / inorganic layer / organic layer / adhesive layer /protective film
Examples 1, 4, 5 and 6 : Peeling layer / antistatic layer /substrate film / inorganic layer / organic layer / inorganic
layer / organic layer / adhesive layer

**[Table 1]**

| | Substrate | Inorganic Layer | Organic Layer | Peelable Layer | Adhesive Layer | Protective film |
|---|---|---|---|---|---|---|
| Comparative Example 1 | PET | alumina | flash | no | no (separately coated) | no |
| Comparative Example 2 | PEN | alumina | flash | no | no (separately coated) | no |
| Example 1 | PET | alumina | flash | yes | thermosetting | no |
| Example 2 | PET | alumina | flash | no | thermosetting | yes |
| Example 3 | PET | alumina | flash | no | UV-curable | yes |
| Example 4 | PET | alumina | coating | yes | thermosetting | no |
| Example 5 | PEN | alumina | flash | yes | thermosetting | no |
| Example 6 | PET | alumina | flash | yes | thermosetting | no |

### Construction of Organic EL Device:

### (1) Preparation of Substrate of Organic EL Device:

An ITO film-having conductive glass substrate (surface resistivity, 10 Ω/□; thickness, 0. 6 mm), serving as an organic EL substrate, was washed with 2-propanol, and then processed for UV ozone treatment for 10 minutes. On the substrate (anode), the following organic compound layers were formed in order by vapor deposition according to a vacuum vapor deposition method.

### (First Hole Transporting Layer)

Copper phthalocyanine: film thickness 10 nm.

### (Second Hole Transporting Layer)

N,N'-diphenyl-N,N'-dinaphthylbenzidine: film thickness 40 nm.

### (Light-Emitting Layer also serving as electron transporting layer)

Tris(8-hydroxyquinolinato)aluminium: film thickness 60 nm.

Finally, 1 nm of lithium fluoride and 100 nm of metal aluminium were formed in order by vapor deposition, thereby providing a cathode; and a silicon nitride film having a thickness of 5 µm was formed on it according to a parallel plate CVD method, thereby constructing an organic EL device.

### (2) Application of Gas-Barrier Film:

The gas barrier films produced in the above Examples were used as a sealing film, and the organic EL devices were sealed with them. Concretely, in Examples 1, 2, 4 and 5, the gas barrier film was put on the surface of the organic EL device in such a manner that the adhesive layer of the film could face the organic EL device, and using a vacuum laminator installed in a nitrogen-purging globe box, this was laminated and heated at 100°C for 1 hour, thereby sealing the organic EL device. On the other hand, in Example 3, after the lamination, the organic EL device was sealed by irradiation with an UV lamp.

As to Examples 2 and 3 of which the gas barrier film has the protective film, the protective film was peeled and removed, and the gas barrier film was provided so that the adhesive layer contacted with the organic EL device. Then the above peeling was carried out. The thickness of the adhesive layer after curing was 20 µm.

In Comparative Examples 1 and 2, an adhesive sheet and the gas barrier film were put on the surface of the organic EL device, then laminated in the same manner as above and heated at 100°C for 1 hour to thereby seal the organic EL device.

### (3) Method of Evaluation of Organic EL Device:

An electric source was connected to the electrode, and the organic EL device was checked for the light emission condition, and the number of the dark spots (non-emitting parts) was counted. The device was left in an environment at 60°C and 90 % RH for 1000 hours, and then tested in the same manner for the light emission condition. The device in which the number of the dark spots did not change is good (OK); but that in which the number increased is not good (NG).

The results are shown in the following Table.

**[Table 2]**

| | |
|---|---|
| | |
| Comparative Example 1 | OK |
| Comparative Example 2 | OK |
| Example 1 | OK |
| Example 2 | OK |
| Example 3 | OK |
| Example 4 | OK |
| Example 5 | OK |
| Example 6 | OK |

In the same manner as in Example 3, another organic EL device was constructed, in which, however, the filler content in the peripheral area of the organic EL device was increased. When the device was intentionally bent, then it was known that the gas barrier film could hardly peel.

The invention has made it possible to provide, as a sealing film for display devices, a gas barrier film capable of simplifying the working process with it and keeping its good gas-barrier property.

## Claims

1. A gas barrier film comprising a substrate film and a barrier layer containing an organic region and an inorganic region on the substrate film, in which, when the organic region is provided on one surface of the gas barrier film, the outermost layer on the side with the organic region of the gas barrier film is an adhesive layer, and when the organic regions are provided on both surfaces of the gas barrier film, at least one outermost layer of the gas barrier film is an adhesive layer, wherein the adhesive is an epoxy-type adhesive or an acrylate-type adhesive.

2. The gas barrier film of Claim 1, wherein the organic region is an organic layer and the inorganic region is an inorganic layer.

3. The gas barrier film of Claim 1 or 2, wherein the layer adjacent to the adhesive layer is an inorganic region or an inorganic layer.

4. The gas barrier film of Claim 2, wherein the two layers adjacent to the adhesive layer are an inorganic layer and an organic layer in that order nearer to the adhesive layer.

5. The gas barrier film of Claim 1 or 2, wherein the layer adjacent to the adhesive layer is an easy adhesive layer.

6. The gas barrier film of any one of Claims 1 to 5, wherein the adhesive layer comprises a UV-curable adhesive or a thermosetting adhesive.

7. The gas barrier film of any one of Claims 2 to 6, wherein the organic layer is formed by curing a composition containing at least one (meth)acrylate compound.

8. The gas barrier film of any one of Claims 2 to 6, wherein the organic layer is formed by curing a composition containing at least one bisphenol skeleton-having (meth)acrylate compound.

9. The gas barrier film of any one of Claims 1 to 8, wherein a peripheral part of the adhesive layer differs in composition from a center part of the adhesive layer.

10. A film comprising a gas barrier film of any one of Claims 1 to 9 and a peeling layer thereon, wherein the peeling layer is provided on the side in which the adhesive payer is not provided.

11. A film comprising the gas barrier film of any one of Claims 1 to 9 and a protective layer thereon, wherein the protective layer is provided on the surface of the adhesive layer of the gas barrier film.

12. Use of the gas barrier film as defined in any one of Claims 1 to 11 for sealing a display device by applying said film in such a manner that its adhesive layer side is on the side near to the display device.

13. The use of Claim 12, wherein the display device is an organic EL device.

14. The use of Claim 12 or 13, wherein a peripheral part of the adhesive layer of the film differs in composition from a center part of the adhesive layer of the film.

15. The use of any one of Claims 12 to 14, wherein a peripheral part of the adhesive layer of the film differs in composition from a center part of the adhesive layer of the film, and the center part is provided on a display part of the display device.

## Patentansprüche

1. Gassperrfilm, umfassend einen Substratfilm und eine Sperrschicht, umfassend einen organischen Bereich und einen anorganischen Bereich auf dem Substratfilm, worin dann, wenn der organische Bereich auf einer Oberfläche des Gassperrfilmes vorgesehen ist, die äußerste Schicht auf der Seite mit dem organischen Bereich des Gassperrfilmes eine Adhäsivschicht ist und wenn die organischen Bereiche auf beiden Oberflächen des Gassperrfilmes vorgesehen sind, zumindest eine äußerste Schicht des Gassperrfilmes eine Adhäsivschicht ist, worin das Adhäsiv ein Adhäsiv vom Epoxytyp oder ein Adhäsiv vom Acrylattyp ist.

2. Gassperrfilm nach Anspruch 1, worin der organische Bereich eine organische Schicht ist und der anorganische Bereich eine anorganische Schicht ist.

3. Gassperrfilm nach Anspruch 1 oder 2, worin die Schicht neben der Adhäsivschicht ein anorganischer Bereich oder eine anorganische Schicht ist.

4. Gassperrfilm nach Anspruch 2, worin die beiden Schichten neben der Adhäsivschicht eine anorganische Schicht und eine organische Schicht in dieser Reihenfolge nächst zu der Adhäsivschicht sind.

5. Gassperrfilm nach Anspruch 1 oder 2, worin die Schicht neben der Adhäsivschicht eine leichte Adhäsivschicht ist.

6. Gassperrfilm nach einem der Ansprüche 1 bis 5, worin die Adhäsivschicht ein UV-härtbares Adhäsiv oder ein wärmehärtendes Adhäsiv umfasst.

7. Gassperrfilm nach einem der Ansprüche 2 bis 6, worin die organische Schicht durch Härten einer Zusammensetzung, umfassend zumindest eine (Meth)acrylatverbindung, gebildet ist.

8. Gassperrfilm nach einem der Ansprüche 2 bis 6, worin die organische Schicht durch Härten einer Zusammensetzung gebildet ist, umfassend zumindest eine bisphenolgerüsthaltige (Meth)acrylatverbindung.

9. Gassperrfilm nach einem der Ansprüche 1 bis 8, worin ein peripherer Teil der Adhäsivschicht sich bezüglich der Zusammensetzung von einem zentralen Teil der Adhäsivschicht unterscheidet.

10. Film, umfassend einen Gassperrfilm nach einem der Ansprüche 1 bis 9 und eine Abschälschicht darauf, worin die Abschälschicht auf der Seite vorgesehen ist, auf der die Adhäsivschicht nicht vorgesehen ist.

11. Film, umfassend den Gassperrfilm nach einem der Ansprüche 1 bis 9 und eine Schutzschicht darauf, worin die Schutzschicht auf der Oberfläche der Adhäsivschicht des Gassperrfilmes vorgesehen ist.

12. Verwendung des Gassperrfilmes wie in einem der Ansprüche 1 bis 11 definiert, zum Abdichten einer Anzeigevorrichtung durch Auferlegung des Filmes auf die Weise, dass seine Adhäsivschichtseite auf der Seite in der Nähe zu der Anzeigevorrichtung ist.

13. Verwendung nach Anspruch 12, worin die Anzeigevorrichtung eine organische EL-Vorrichtung ist.

14. Verwendung nach Anspruch 12 oder 13, worin ein peripherer Teil der Adhäsivschicht des Films sich bezüglich der Zusammensetzung von einem zentralen Teil der Adhäsivschicht des Filmes unterscheidet.

15. Verwendung nach einem der Ansprüche 12 bis 14, worin ein peripherer Teil der Adhäsivschicht des Filmes sich bezüglich der Zusammensetzung von einem zentralen Teil der Adhäsivschicht des Filmes unterscheidet und das zentrale Teil auf einem Anzeigeteil der Anzeigevorrichtung vorgesehen ist.

## Revendications

1. Film formant barrière contre les gaz comprenant un film de substrat et une couche barrière contenant une zone organique et une zone inorganique sur le film de substrat, dans lequel, quand la zone organique est disposée sur une surface particulière du film formant barrière contre les gaz, la couche la plus extérieure sur le côté avec la zone organique du film formant barrière contre les gaz est une couche adhésive, et quand les zones organiques sont disposées sur les deux surfaces du film formant barrière contre les gaz, au moins une couche la plus extérieure du film formant barrière contre les gaz est une couche adhésive, dans laquelle l'adhésif est un adhésif de type époxy ou un adhésif de type acrylate.

2. Film formant barrière contre les gaz selon la revendication 1, dans lequel la zone organique est une couche organique et la zone inorganique est une couche inorganique.

3. Film formant barrière contre les gaz selon la revendication 1 ou 2, dans lequel la couche adjacente à la couche adhésive est une zone inorganique ou une couche inorganique.

4. Film formant barrière contre les gaz selon la revendication 2, dans lequel les deux couches adjacentes à la couche adhésive sont une couche inorganique et une couche organique dans cet ordre en se rapprochant de la couche adhésive.

5. Film formant barrière contre les gaz selon la revendication 1 ou 2, dans lequel la couche adjacente à la couche adhésive est une couche légèrement adhésive.

6. Film formant barrière contre les gaz selon l'une quelconque des revendications 1 à 5, dans lequel la couche adhésive comprend un adhésif durcissable aux UV ou un adhésif thermodurcissable.

7. Film formant barrière contre les gaz selon l'une quelconque des revendications 2 à 6, dans lequel la couche organique est formée en faisant durcir une composition contenant au moins un composé de (méth)acrylate.

8. Film formant barrière contre les gaz selon l'une quelconque des revendications 2 à 6, dans lequel la couche organique est formée en faisant durcir une composition contenant au moins un composé de (méth)acrylate ayant un squelette de bisphénol.

9. Film formant barrière contre les gaz selon l'une quelconque des revendications 1 à 8, dans lequel la composition d'une partie périphérique de la couche adhésive diffère d'une partie centrale de la couche adhésive.

10. Film comprenant un film formant barrière contre les gaz selon l'une quelconque des revendications 1 à 9 et une couche à décollement dessus, dans lequel la couche à décollement est disposée côté sur lequel la couche adhésive n'est pas prévue.

11. Film comprenant un film formant barrière contre les gaz selon l'une quelconque des revendications 1 à 9 et une couche protectrice dessus, dans lequel la couche protectrice est disposée sur la surface de la couche adhésive du film formant barrière contre les gaz.

12. Utilisation du film formant barrière contre les gaz selon l'une quelconque des revendications 1 à 11 pour sceller un dispositif d'affichage en appliquant ledit film de telle sorte que son côté couche adhésive est sur le côté proche du dispositif d'affichage.

13. Utilisation selon la revendication 12, dans laquelle le dispositif d'affichage est un dispositif EL organique.

14. Utilisation selon la revendication 12 ou 13, dans laquelle la composition d'une partie périphérique de la couche adhésive du film diffère d'une partie centrale de la couche adhésive du film.

15. Utilisation selon l'une quelconque des revendications 12 à 14, dans laquelle la composition d'une partie périphérique de la couche adhésive du film diffère d'une partie centrale de la couche adhésive du film, et la partie centrale est disposée sur une partie d'affichage du dispositif d'affichage.
